# EUROPÄISCHE PATENTANMELDUNG

(11) **EP 4 424 576 A1**
(43) Veröffentlichungstag der Anmeldung: **04.09.2024**
(21) Anmeldenummer: 23201231.0
(22) Anmeldetag: 02.10.2023
(51) Int. Cl.: B62J 17/083

(54) **REGENVERDECK FÜR EIN FAHRRAD**

(30) Priorität: 28.02.2023 DE 202023100933 U
(71) Anmelder: RTI Sports GmbH, 56070 Koblenz (DE)
(72) Erfinder: GLOGER, Stefan, 64367 Mühltal (DE); ALTENHOFER, Bjørn, 56077 Koblenz (DE); TOROCZKAY, Robert, 69493 Hirschberg (DE)
(74) Vertreter: dompatent von Kreisler Selting Werner - Partnerschaft von Patent- und Rechtsanwälten mbB

(57) **Zusammenfassung**

Ein Regenverdeck für ein Fahrrad weist einen an einem Fahrrad befestigbaren Aufnahmebehälter (24) zum Verstauen des Regenverdecks auf. Mit dem Aufnahmebehälter (24) ist ein Halteelement (28) verbunden, das rausbewegbar, insbesondere herausschwenkbar ist. Mit dem Halteelement (28) ist ein zumindest teilweise aus flexiblem Material hergestelltes Dachelement (30) verbunden. An einer Vorderseite des Dachelements (30) ist ein Fixierelement zum Verbinden mit an einer am Fahrrad vorgesehenen Dach-Haltevorrichtung vorgesehen, sodass das Dachelement (30) aufgespannt ist.

## Beschreibung

Die Erfindung betrifft ein Regenverdeck für ein Fahrrad. Hierbei kann es sich um ein Fahrrad mit oder ohne Elektromotor handeln. Auch ist das Regenverdeck für ausschließlich motorisch angetriebene ein- oder mehrspurige Fahrzeuge geeignet.

Bei Fahrrädern besteht grundsätzlich die Problematik, dass die das Fahrrad nutzende Person bei Regen nass wird. Es ist insbesondere aufwändig Regenhosen, Regenjacken, Regenponcho oder dergleichen an- und auszuziehen. Dies ist insbesondere bei kürzeren Fahrten aufwändig und unangenehm. Andererseits ist ein dauerhaftes Regenverdeck, das beispielsweise fest am Fahrrad montiert ist, nicht erwünscht, zumal dies beispielsweise windanfällig ist und die Fahrdynamik beeinträchtigen würde.

Aufgabe der Erfindung ist es, ein Regenverdeck für ein Fahrrad oder dergleichen zu schaffen, das auf einfache Weise in einem kurzen Zeitraum montiert und demontiert werden kann.

Die Lösung der Aufgabe erfolgt erfindungsgemäß durch ein Regenverdeck mit den Merkmalen des Anspruchs 1.

Das erfindungsgemäße Regenverdeck umfasst einen Aufnahmebehälter zum Verstauen des Regenverdecks, bzw. eines großen Teils des Regenverdecks. Dies ist insbesondere zum einfachen Mitführen des Regenverdecks vorteilhaft, wobei es besonders bevorzugt ist, dass der Aufnahmebehälter unmittelbar am Fahrrad befestigt ist. Der entsprechende Aufnahmebehälter kann beispielsweise eine Schale und einen Deckel aufweisen, die ein zusammengelegtes Regenverdeck umschließen und insofern das Regenverdeck vor Verschmutzung und dergleichen schützen können. Des Weiteren ist erfindungsgemäß mit dem Aufnahmebehälter ein Halteelement verbunden. Das Halteelement kann aus dem Aufnahmebehälter herausbewegt werden, wobei insbesondere ein Herausschwenken und/oder Herausschieben des Halteelements aus dem Aufnahmebehälter bevorzugt ist. Mit dem Halteelement ist ein Dachelement des Regenverdecks verbunden. Das Dachelement ist vorzugsweise zumindest teilweise aus elastischem Material, beispielsweise aus textilem Material und/oder als Kunststofffolie hergestellt. Das Dachelement wird in bevorzugter Ausführungsform über den Kopf des Fahrradfahrers gespannt bzw. in diesem Bereich angeordnet. Hierzu weist das Dachelement insbesondere an einer Vorderseite ein Fixierelement auf. Das Fixierelement dient zum Verbinden mit einer am Fahrradrahmen vorgesehen Dach-Haltevorvorrichtung, sodass das Dachelement insbesondere zwischen dem Halteelement und der Dachhaltevorrichtung aufgespannt ist und den Fahrradfahrer schützt. In besonders bevorzugter Ausführung ist das Dachelement mit dem Halteelement zusätzlich über einen drehbar gelagerten, federbelasteten Spannbügel verbunden, um ein stets faltenfreies Dachelement zu gewährleisten.

Weiterhin sind in besonders bevorzugter Ausführung zwischen dem Haltelement und dem Fixierelement Spannelemente (z.B. Gurte, Drähte, etc.) vorgesehen. Diese sind insbesondere als sich diagonal kreuzende und längenverstellbare Spannelemente (Gurte, Drähte, etc.) angeordnet, die nach der Befestigung an der Dach-Haltevorrichtung mechanische Schwingungen verringern.

Vorzugsweise ist das Dachelement an dem Halteelement derart befestigt, dass es bei aus dem Aufnahmebehälter herausbewegten Haltelement in einem oberen Bereich des Halteelements angeordnet ist. Ist das Halteelement beispielsweise klappbar mit dem Aufnahmebehälter, insbesondere einem oberen Bereich des Aufnahmebehälters verbunden, erfolgt ein Herausklappen des Halteelements nach oben, wobei sodann wieder in einem oberen Bereich des Halteelements das Dachelement befestigt ist und von dort nach vorne zur am Fahrrad vorgesehenen Dach-Haltevorrichtung in aufgespannter Position geführt ist. Hierdurch ist es möglich, auf einfache Weise das Dachelement insbesondere oberhalb eines Fahrradfahrers anzuordnen.

Zum weiteren Schutz des Fahrradfahrers ist es besonders bevorzugt, dass mit dem Halteelement zusätzlich zu dem Dachelement, insbesondere zwei Seitenelementen verbunden sind. Die Seitenelemente sind vorzugsweise ebenfalls zumindest teilweise aus flexiblem Material hergestellt. Hierdurch ist der Fahrradfahrer auch seitlich vor Regen geschützt. Bevorzugt ist es, dass zwei Seitenelemente vorgesehen sind, sodass in aufgespannter Position bezogen auf den Fahrer links und rechts neben dem Fahrer ein Seitenelement angeordnet ist. Die beiden Seitenelemente sind des Weiteren vorzugsweise an seitlichen Bereichen des Halteelements angeordnet, bzw. in diesen Bereichen fest mit dem Halteelement verbunden. Bevorzugt ist es hierbei, dass auch die beiden Seitenelemente sowie das Dachelement zum Transport vollständig innerhalb des Aufnahmebehälters angeordnet werden können. Da eine insbesondere feste und dauerhafte Verbindung zwischen den Seitenelementen und dem Halteelement realisiert ist, muss nach dem Öffnen des Aufnahmebehälters kein Verbinden der Seitenelemente mit dem Halteelement erfolgen. Vielmehr müssen die Halteelemente und auch das Dachelement nur mit entsprechenden Haltevorrichtungen am Fahrrad in bevorzugter Ausführungsform verbunden werden. Insofern ist es besonders bevorzugt, dass die beiden Seitenelemente an einer Vorderseite Fixierelemente zum Verbinden mit dem Fahrrad aufweisen. Hierzu ist es bevorzugt, dass die an den beiden Seitenelementen vorgesehenen Fixierelemente mit am Fahrradrahmen vorgesehenen Seiten-Haltevorrichtungen zusammenwirken. Hierbei kann es sich um magnetische Verbindungselemente, Haken und Ösen, Schlaufen oder dergleichen handeln.

In einer weiteren bevorzugten Ausführungsform weisen die Seitenelemente jeweils ein aus steifem Material hergestelltes Seitenteil auf. Dieses ist beispielsweise aus einem Kunststoffmaterial hergestellt und weist insbesondere eine derartige Steifigkeit auf, sodass es von Hand nicht dauerhaft, sondern allenfalls elastisch verformt werden kann Hierbei handelt es sich vorzugsweise um ein flächiges Seitenteil, das sich in besonders bevorzugter Ausführungsform im vorderen Bereich der Seitenelemente über die gesamte Höhe der Seitenelemente erstreckt. Hierbei weisen die Seitenelemente vorzugsweise eine Größe von ca. 35 cm bis 40cm x 100 cm bis 110cm im aufgespannten Zustand auf. Besonders bevorzugt ist es, dass die Fixierelemente an den Seitenteilen angeordnet sind bzw. in die Seitenteile integriert sind.

Bei einer weiteren bevorzugten Ausführungsform sind die Seitenteile derart ausgebildet, dass sie Griffelemente wie Griffmulden, Grifföffnungen oder Griffansätze aufweisen. Hierdurch ist es auf einfache Weise für den Benutzer möglich, das Seitenteil auf dem Fahrrad sitzend zu greifen und die vorzugsweise am Seitenteil vorgesehenen Fixierelemente mit den Seiten-Haltevorrichtungen, die am Fahrrad vorgesehen sind, zu verbinden. Dies ist gegebenenfalls auch in bevorzugter Ausführungsform am Dachelement vorgesehen, sodass auch das Dachelement an der Vorderseite gegebenenfalls aus steifem Material hergestelltes Dachteil aufweist, das ebenfalls ein Griffelement aufweist. Insofern ist es für den Benutzer wiederum möglich, sitzend das Dachelement zu greifen, über den Kopf zu führen und die vorzugsweise an einem steifen Teil des Dachelements vorgesehenen Fixierelemente mit der Dach-Haltevorrichtung zu verbinden.

Des Weiteren ist es, bezogen auf die Seitenelemente, bevorzugt, dass diese unabhängig oder zusätzlich zum Vorsehen von Seitenteilen aus steifem Material Verbindungsteile aus festerem federelastischem Material aufweisen. Die Verbindungsteile sind insbesondere schwenkbar mit dem Halteelement verbunden. Vorzugsweise sind die Verbindungsteile mit den seitlichen Bereichen des Halteelements verbunden. Besonders bevorzugt ist es, dass je Seitenelement ein aus federelastischem Material vorgesehenes Verbindungsteil und ein aus steifem Material vorgesehenes Seitenteil vorgesehen ist, wobei diese beiden Teile über ein aus flexiblem Material hergestelltes Zwischenteil miteinander verbunden sind. In besonders bevorzugter Ausführungsform ist das Verbindungsteil somit derart ausgebildet, dass es eine Spannung auf das Zwischenelement und das Seitenteil aufbringt, sodass das Seitenelement des Regenverdecks stets gespannt ist. Diese Spannung kann in besonders bevorzugter Ausführungsform durch das Verbindungsteil selbst erzeugt werden. Hierzu ist das Verbindungsteil in bevorzugter Ausführungsform aus federelastischem Material hergestellt oder weist derartiges Material auf. Beispielsweise weist das Federelement Faserplatten, insbesondere Glasfaserplatten auf. Zusätzlich oder alternativ kann auch ein Spannelement wie eine Feder im Bereich der Verbindung zwischen dem Verbindungsteil und dem seitlichen Bereich des Halteelements vorgesehen sein. Insbesondere erzeugen die Verbindungsteile bezogen auf den Benutzer des Fahrrads stehts eine Kraft nach außen, sodass die Seitenelemente und insbesondere die aus flexiblem Material hergestellten Zwischenteile stets gespannt sind. Bei dem flexiblem Material kann es sich insbesondere um textile Materialien und/oder Kunststofffolien und/oder beschichtete Materialien handeln.

Das Zwischenteil aus flexiblem Material ist insbesondere so ausgeformt, dass auch der Bereich vor dem Fahrer über den, das Lenkelement haltenden, Armen aufgespannt werden kann. Um dies zu ermöglichen sind an den Zwischenteilen vorzugsweise zusätzliche Verbindungselemente wie etwa Haken, Ösen oder Schlaufen etc. angebracht, die mit dem unteren Teil des Windschutzes und/oder dem Dachhaltelement verbunden werden können. Die Zwischenteile können zu diesem Zweck symmetrisch oder unsymmetrisch ausgeformt werden.

Die Größe des Seitenteils sowie des Verbindungsteils ist vorzugsweise derart gewählt, dass dies auf einfache Weise in dem Aufnahmebehälter angeordnet werden kann. Vorzugsweise sind die Abmessungen derart gewählt, dass die entsprechenden Teile Außenabmessungen aufweisen, die im Wesentlichen Innenabmessungen des Aufnahmebehälters entsprechen. Die Seitenteile weisen vorzugsweise eine Größe im Bereich von ca. 38 cm x 25 cm und die Verbindungseile von ca. 38 cm x 35 cm , jeweils +- 5 cm auf.

In besonders bevorzugter Ausführungsform ist der Aufnahmebehälter derart am Fahrrad befestigt, das das Halteelement in herausbewegter Position oberhalb des Aufnahmebehälters vorgesehen ist. Vorzugsweise ist das Halteelement im Rückenbereich des Benutzers angeordnet. Insofern ist es bevorzugt, dass ein Abdeckelement zum Abdecken des Halteelements vorgesehen ist. Vorzugsweise handelt es sich hierbei nicht um ein gesondertes, insbesondere aus flexiblem Material hergestelltes Element. Vielmehr ist es bevorzugt, dass das Abdeckelement beispielsweise mit einem der Seitenelemente und vorzugsweise mit dem Dachelement fest verbunden, insbesondere einstückig ausgebildet ist.

In einer weiteren besonders bevorzugten Ausführungsform sind die Dach-Haltevorrichtungen und/oder die Seiten-Haltevorrichtungen an einem mit dem Fahrradrahmen verbindbaren Windschutz angeordnet. Der Windschutz ist vorzugsweise aus steifem Material hergestellt und teilweise transparent ausgebildet. Besonders bevorzugt ist es, dass der Windschutz höhenverstellbar ist, sodass dieser an unterschiedlich große Personen angepasst werden kann. Vorzugsweise erfolgt die Höhenverstellung für Dach- und Seiten-Haltevorrichtung parallel zur Verstellrichtung des Aufnahmebehälters.

Ferner betrifft die Erfindung ein Fahrrad mit einem Fahrradrahmen, der zumindest ein Vorderrad und zumindest ein Hinterrad trägt. Ferner ist ein Lenkelement wie ein Lenker vorgesehen, der über einen entsprechenden Lenkmechanismus mit dem mindestens einen Vorderrad und/oder dem mindestens einen Hinterrad zum Lenken verbunden ist. Ferner ist mit dem Fahrradrahmen insbesondere höhenverstellbar ein Sattelstützrohr verbunden, das einen Sattel trägt. Erfindungsgemäß ist ein Regenverdeck wie vorstehend beschrieben vorgesehen, wobei der Aufnahmebehälter des Regenverdecks mit dem Fahrradrahmen oder dem Sattelstützrohr verbunden ist. Das Regenverdeck ist wie vorstehend beschrieben vorteilhaft weitergebildet. Insbesondere durch Verbinden des Aufnahmebehälters mit dem Sattelstützrohr erfolgt automatisch beim Einstellen der Sattelhöhe auch ein Einstellen der Höhe des Regenverdecks, insbesondere des Dachelements des Regenverdecks. Selbstverständlich ist auch ein gesonderter Mechanismus zur Höheneinstellung möglich.

Bei dem Fahrrad handelt es sich vorzugsweise um ein E-Bike, ein ein- oder mehrspuriges Fahrrad oder auch ein Moped. Das erfindungsgemäße Regenverdeck ist auch für andere Fahrzeug der Zulassungsklassen L-1 bis L-7 geeignet.

Vorzugsweise ist der Windschutz mit einem Fahrradrahmen, vorzugsweise in Fahrtrichtung vor dem Lenkelement verbunden. Der optional vorgesehene Windschutz weist, wie vorstehend anhand des Regenverdecks beschrieben, vorzugsweise Dach-Haltevorrichtungen und/oder Seiten-Haltevorrichtungen auf.

Des Weiteren ist es bevorzugt, dass der Windschutz zumindest zwei Windschutzelemente aufweist, wobei ein unteres Windschutzelement fest oder verschiebbar mit dem Fahrradrahmen und ein oberes Windschutzelement vorzugsweise verschiebbar mit dem unteren Windschutzelement verbunden ist. Insbesondere ist ein stufenweises oder stufenloses Verschieben und sodann Fixeren der beiden Windschutzelemente möglich. Somit ist es auf einfache Weise möglich, die Höhe des Windschutzelements an die Größe der das Fahrrad nutzenden Person anzupassen. Des Weiteren ist es bevorzugt, dass die Windschutzelemente, ähnlich wie ein Visier um eine Achse drehbar gelagert und fixierbar sind, um Anpassungen an die Umgebungsbedingungen vornehmen zu können.

Das mit dem Fahrrad verbundene Regenverdeck ist wie vorstehend beschrieben vorteilhaft weitergebildet.

Nachfolgend wird die Erfindung anhand bevorzugter Ausführungsformen unter Bezugnahme auf die anliegenden Zeichnungen näher erläutert.

Es zeigen:
- Figur 1a bis 1e: ein Fahrrad mit erfindungsgemäßem Regenverdeck ohne Seitenelemente mit aufgespanntem Dachelement in unterschiedlichen Ansichten,
- Figur 2a bis 2e: das vollständig aufgespannte Regenverdeck ohne Fahrrad in unterschiedlichen Ansichten,
- Figur 3a bis 4d: Teil eines Fahrrads mit einem Aufnahmebehälter verstauten Regenverdeck in unterschiedlichen Ansichten,
- Figuren 5 - 10: in unterschiedlichen Ansichten a, b, c und d, unterschiedliche Schritte des Aufspannens des Regenverdecks,
- Figur 11: eine schematische seitliche Ansicht mit aufgespannten Regenverdecks in unterschiedlichen Höhenpositionen und
- Figur 12a bis 12e: unterschiedliche Ansichten eines Fahrrads mit aufgespanntem Regenverdeck einer zweiten Ausführungsform.

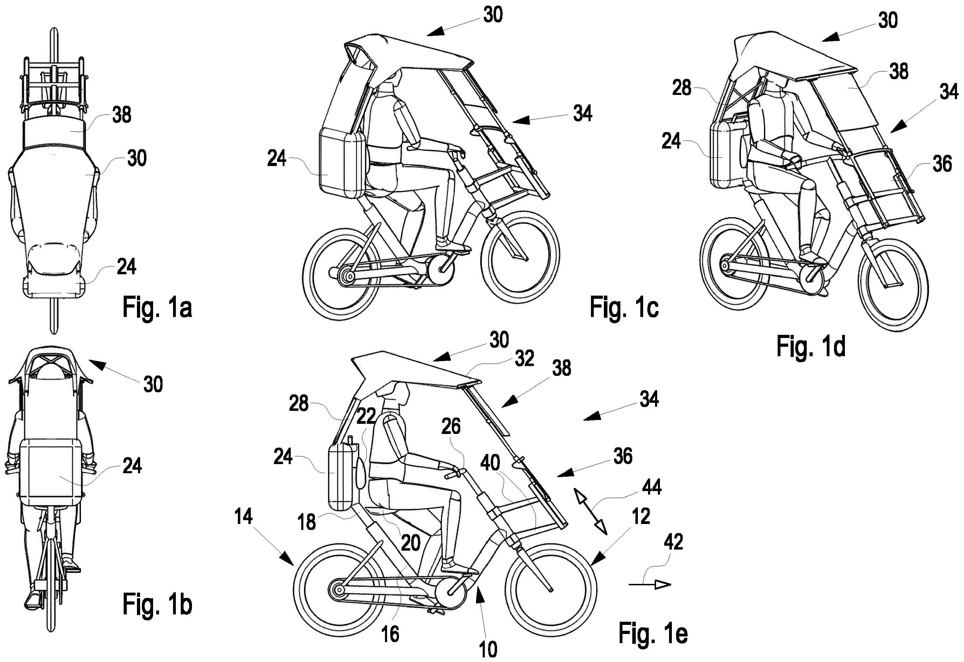

Das in den Figuren 1 schematisch dargestellte Fahrrad weist einen Fahrradrahmen 10 auf, der ein Vorderrad 12 sowie ein Hinterrad 14 trägt. In einem Sattelrohr 16 des Fahrradrahmens 10 ist ein Sattelstützrohr 18 verschiebbar gehalten. Das Sattelstützrohr 18 ist mit einem Fahrradsattel 20 verbunden, wobei das Sattelstützrohr 18 im dargestellten Ausführungsbeispiel mit einer Rückenlehne 22 verbunden ist. Im Bereich der Rückenlehne 22 ist ein Aufnahmebehälter 24 befestigt. Im dargestellten Ausführungsbeispiel ist das Vorderrad mit Hilfe eines Fahrradlenkers 26 lenkbar.

In den Darstellungen der Figuren 1a bis 1e ist mit dem Aufnahmebehälter 24 ein aus diesem herausgeschwenktes Halteelement 28 verbunden. Mit dem Halteelement 28 ist ein Dachelement 30 verbunden. An einer Vorderseite 32 des Dachelements 30 sind nicht näher dargestellte Fixierelemente vorgesehen, die mit Dach-Haltevorrichtungen zusammenwirken. Die Dach-Haltevorrichtungen sind an einem Windschutz 34 bzw. Halteelementen des Windschutzes 34 angeordnet. An einer Rückseite des Dachelements 30 ist ein vorzugsweise als Spannbügel ausgebildetes Spannelement vorgesehen. Dies erstreckt sich vorzugsweise quer zur Fahrtrichtung. Unter dem Spannbügel kann eine Öffnung zur Belüftung des Raums unter dem Dachelement vorgesehen sein.

Der Windschutz 34 ist im dargestellten Ausführungsbeispiel zweiteilig ausgebildet und weist ein unteres Windschutzelement 36 sowie ein oberes Windschutzelement 38 auf. Das untere Windschutzelement 36 ist über Halterungen 40 fest mit dem Fahrradrahmen 10 verbunden und in Fahrtrichtung 42 vor dem Lenker 26 angeordnet. Das untere Windschutzelement 36 kann entweder fest mit dem Fahrradrahmen verbunden oder in Richtung eines Pfeils 44 verschoben werden. Das obere Windschutzelement 38 ist parallel zum unteren Windschutzelement 36 angeordnet und in Richtung des Pfeils 44 verschiebbar.

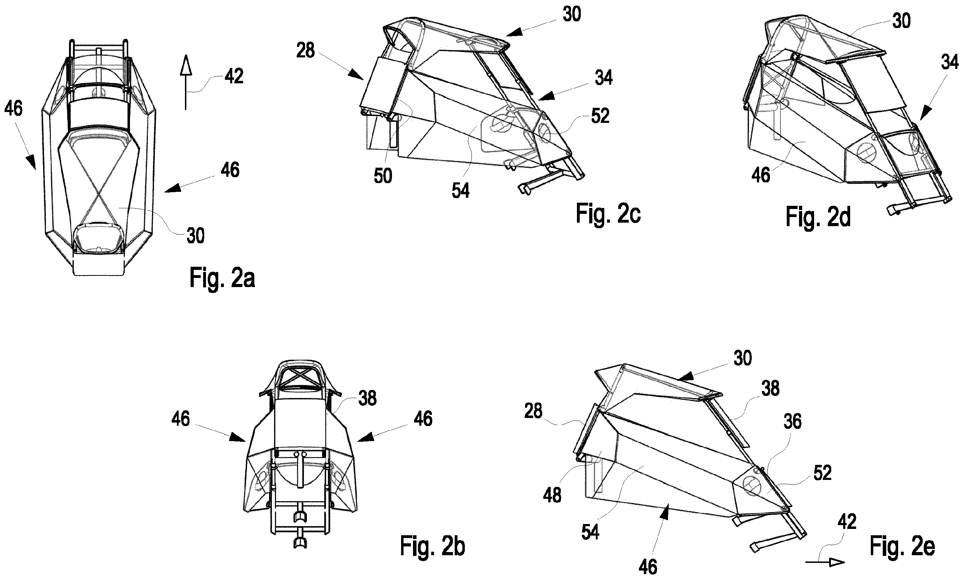

Zusätzlich zu dem Dachelement 30 kann das Regenverdeck zwei Seitenelemente 46 (Figur 2) aufweisen, die bezogen auf die Fahrtrichtung 42 seitlich neben dem Benutzer angeordnet sind. Die beiden Seitenelemente 46 sind jeweils seitlich an dem Halteelement 28 befestigt. Die Befestigung erfolgt insbesondere über die gesamte Höhe des Halteelements 28. Hierzu weist das Seitenelement 46 ein aus federelastischem Material hergestelltes Verbindungsteil 48 auf. Dies ist insbesondere um eine sich entlang der Längsseite 50 des Halteelements 28 erstreckendes Scharnier befestigt.

Ferner weisen die beiden Seitenelemente 46 ein ebenfalls aus steifem Material hergestelltes Seitenteil 52 auf. Dieses ist bezogen auf die Fahrtrichtung 42 an einem vorderen Bereich des Seitenteils 46 angeordnet. Zwischen den beiden aus steiferem Material hergestellten Teilen 48 und 52 weist das Seitenelement 46 ein aus elastischem Material hergestelltes Zwischenelement 54 auf.

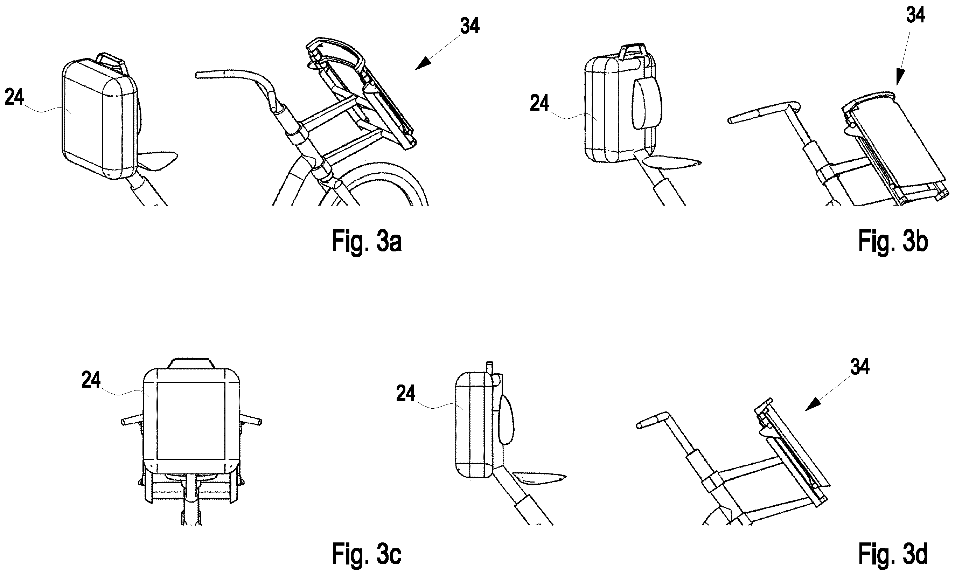

In den Figuren 3 ist ein Teil eines Fahrrads in unterschiedlichen Perspektiven dargestellt, wobei der Aufnahmebehälter 24 geschlossen ist und das Regenverdeck vollständig innerhalb des Aufnahmebehälters 24 angeordnet ist. Unabhängig vom Aufnahmebehälter 24 ist der Windschutz 34 zusammengeschoben, sodass sich sowohl das obere als auch das untere Windschutzelement in der unteren Position befinden. Unabhängig davon, ob das Regenverdeck aus dem Aufnahmebehälter herausgenommen und genutzt wird, kann der Windschutz 34, insbesondere das obere Windschutzelement 38 auch in unterschiedlichen Positionen angeordnet werden, sodass der Windschutz 34 unabhängig vom Regenverdeck genutzt werden kann.

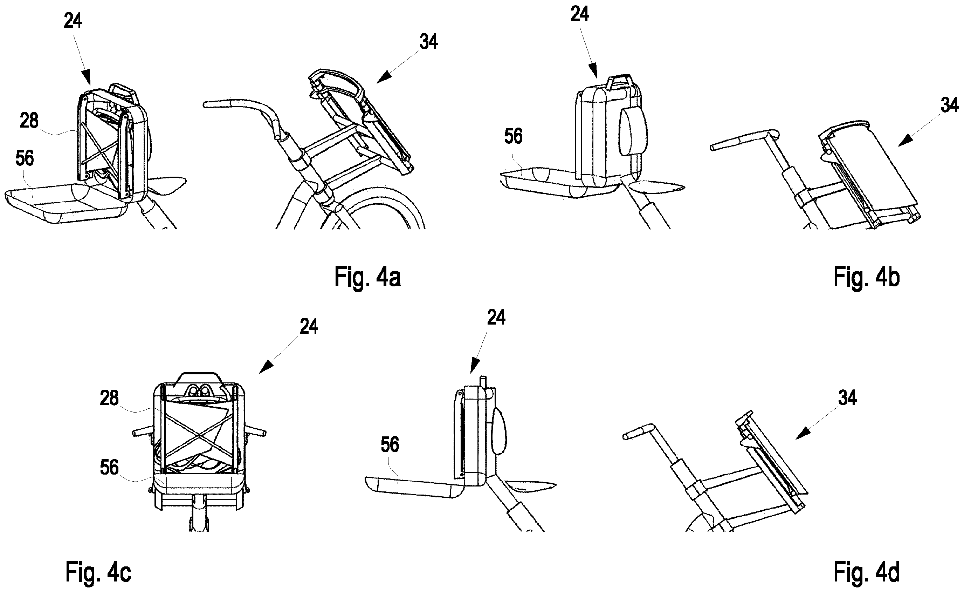

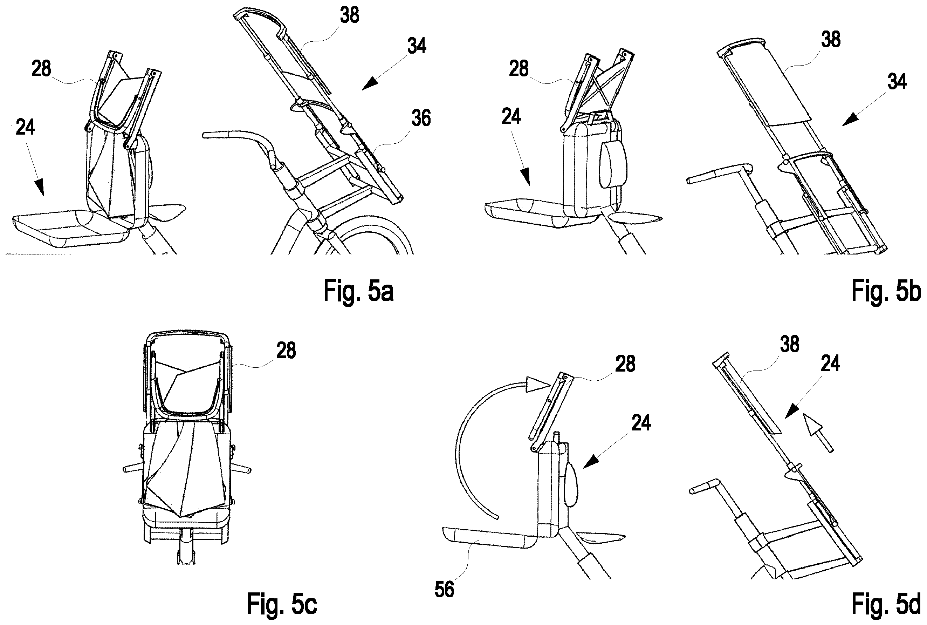

In den Figuren 4d ist sodann der erste Schritt zum Aufbauen bzw. Montieren des Regenverdecks dargestellt. Zunächst wird ein Deckel 56 des Aufnahmebehälters 24 geöffnet, sodass das innerhalb des Aufnahmebehälters 24 vorgesehene Halteelement 28 zugänglich ist. Im nächsten Schritt wird, wie in den Figuren 5 dargestellt, das Halteelement 28 aus dem Aufnahmebehälter 24 nach oben herausgeklappt. Ferner wird das obere Windschutzelement 28 nach oben geschoben.

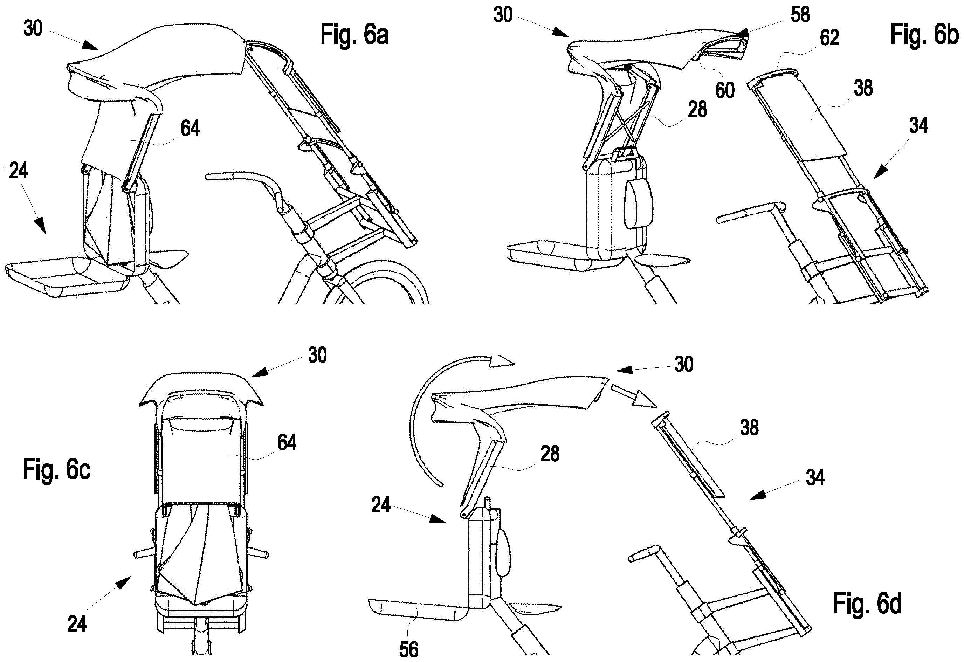

Im nächsten Schritt (Figuren 6) wird das Dachelement 30 des Regenverdecks aus dem Aufnahmebehälter 24 herausgenommen und das an einer Vorderseite 58 des Dachelements 30 vorgesehene Fixierelement 60 mit der Dachhaltevorrichtung 62 verbunden. Die Dachhaltevorrichtung 62 ist im dargestellten Ausführungsbeispiel am oberen Windschutzelement 28 angeordnet. Hierdurch ist auf einfache Weise ein Aufspannen des Dachelements 30 möglich. Im Bereich des Halteelements 28 ist mit dem Dachelement 30 ein Abdeckelement 64 verbunden, insbesondere einstückig ausgebildet. Die dient zur Abdeckung des Halteelements 28.

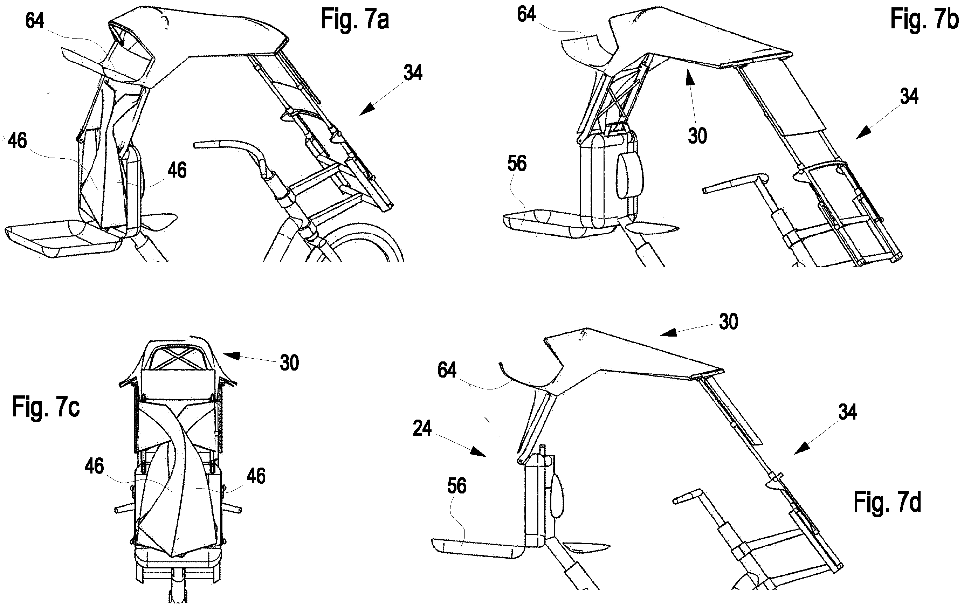

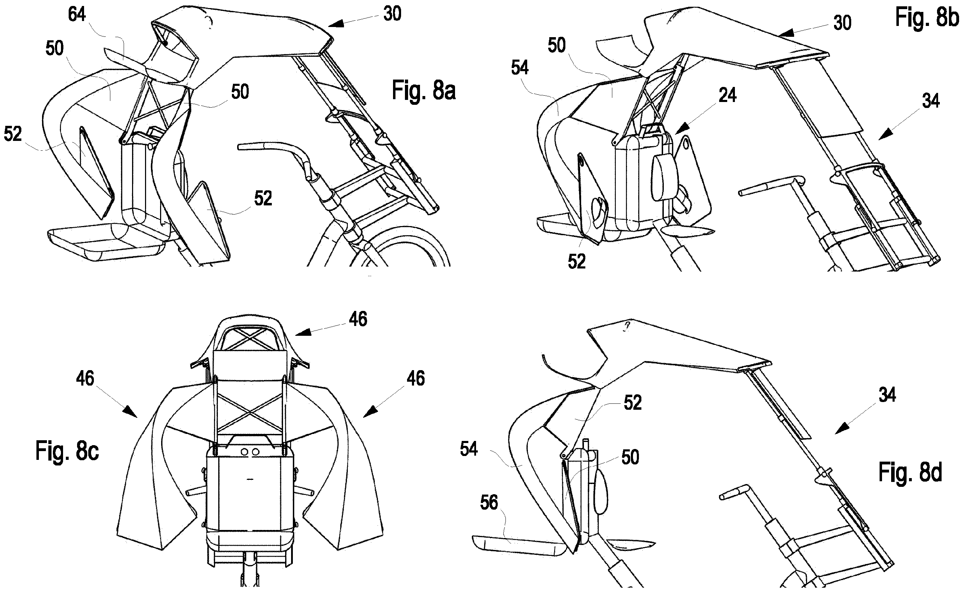

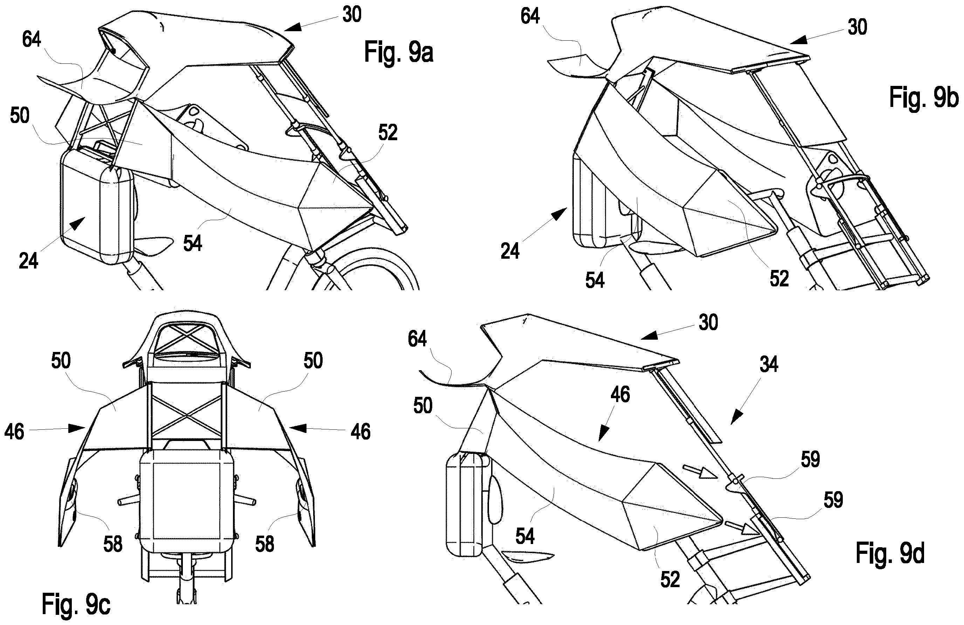

Wie in den Figuren 7 dargestellt, wird das noch nicht fixierte Abdeckelement 64 nach oben geklappt. Hierdurch sind die beiden Seitenelemente 46 zugänglich. Die beiden Seitenelemente 46 sind über das Verbindungsteilt 50 schwenkbar mit dem Halteelement 28 im seitlichen Bereich verbunden (Figuren 8). Die beiden Verbindungsteilte 50 sind jeweils über ein aus elastischem Material hergestelltes Zwischenelement mit den Seitenteilen 52 der Seitenelemente 56 verbunden. Die ebenfalls aus festem Material hergestellten Seitenteile 52 weisen beispielsweise Griffelemente 58 (Figur 9c) auf. Mit Hilfe der Griffelemente 58 kann eine auf dem Fahrrad sitzende Person die Seitenteile 46 und insbesondere das Vorderteil 52 auf einfache Weise mit Seiten-Haltevorrichtungen 59, die ebenfalls mit dem Windschutz 34 mittelbar oder unmittelbar verbunden sind, verbinden.

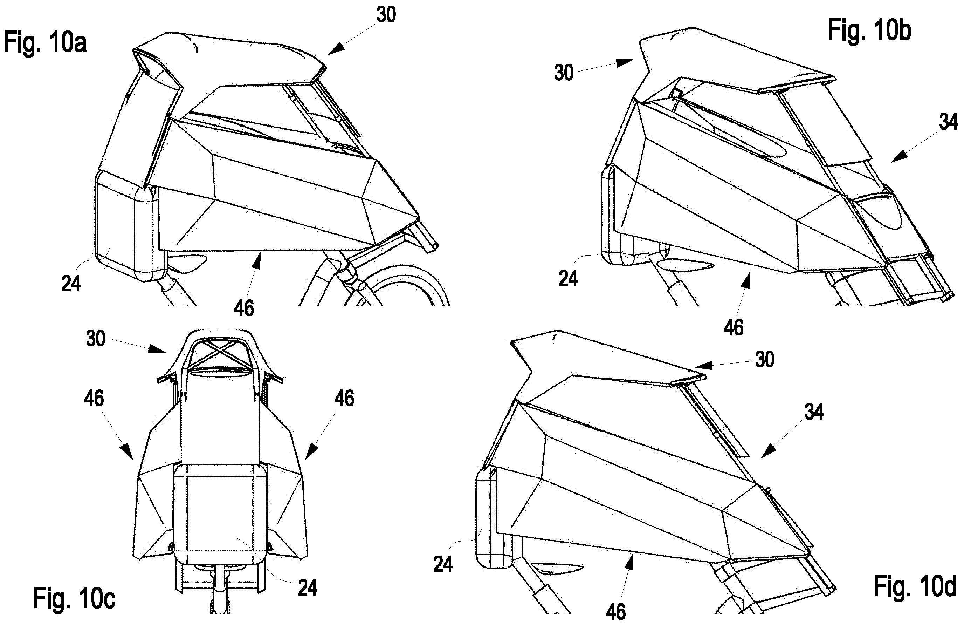

Die Figuren 10 zeigen sodann in unterschiedlichen Ansichten das Fahrrad mit vollständig montiertem Regenverdeck.

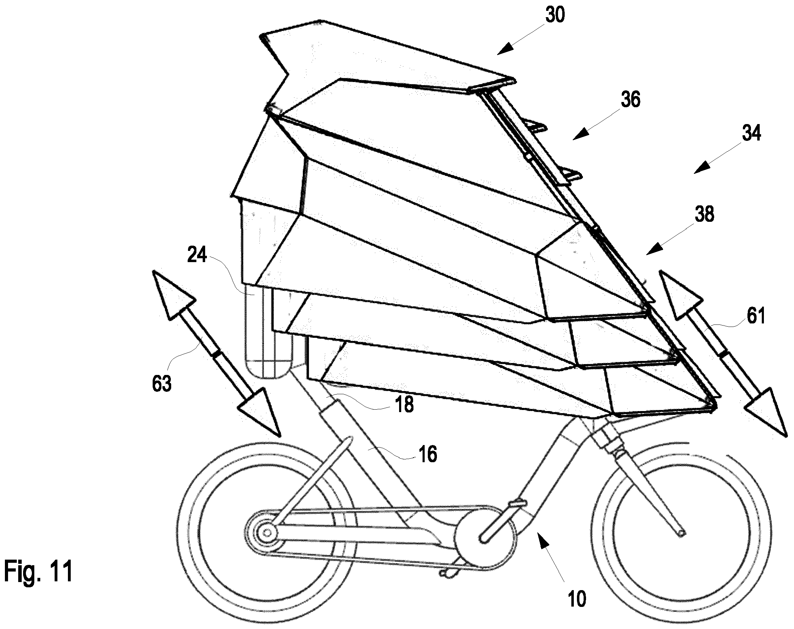

Wie aus Figur 11 ersichtlich ist, und durch die Pfeile 61, 63 dargestellt, ist es möglich, das Regenverdeck in unterschiedlichen Höhen-Positionen anzuordnen. Insbesondere ist hier eine stufenweise oder stufenlose Höhenanpassung möglich, sodass die Höhe des Regenverdecks und insbesondere des Dachelements 30 auf die Größe der das Fahrrad nutzenden Person eingestellt werden kann. Dies ist einerseits dadurch möglich, dass das obere Windschutzelement 36 und gegebenenfalls auch das untere Windschutzelement 38 in Richtung des Pfeils 62 verschoben werden kann. Da der Aufnahmebehälter 24 am Sattelstützrohr 18 befestigt ist und das Sattelstützrohr 18 im Sattelrohr 16 des Rahmens 10 verschiebbar fixiert ist, kann der Aufnahmebehälter 24 und somit das gesamte über den Aufnahmebehälter 24 mittels des Halteelements 28 mit diesem verbundene Regenverdeck in der Höhe variiert werden. Insbesondere verläuft das Sattelstützrohr 18 parallel zu der durch die Pfeile 61 dargestellten Verschieberichtungen zumindest des oberen Windschutzelements 36.

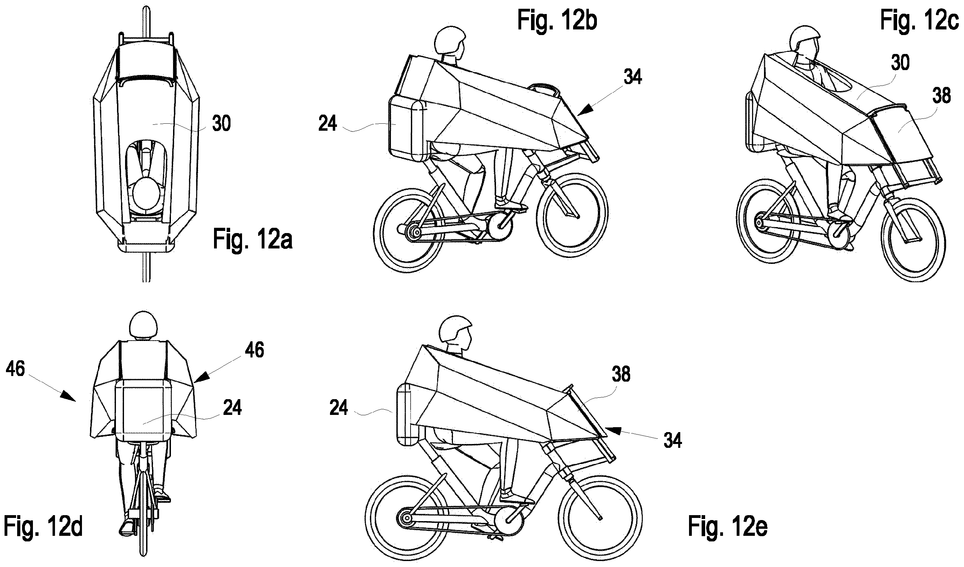

Bei einer in den Figuren 12 dargestellten alternativen Nutzungsform der Erfindung sind mit Ausnahme eines etwas anders verstauten Dachelements 30 die übrigen Elemente identisch. Das Dachelement 30 ist hierbei nicht über dem Kopf einer das Fahrrad nutzendenden Person angeordnet, sondern im Aufnahmebehälter abgelegt/verstaut, sodass der Kopf des Benutzers oberhalb der Seitenelemente angeordnet ist.

Das obere Windschutzelement 36 ist bei dieser Ausführungsform in seiner unteren Position angeordnet.

## Patentansprüche

1. Regenverdeck für ein Fahrrad, mit
einem an einem Fahrradrahmen (10) befestigbaren Aufnahmebehälter (24) zum Verstauen des Regenverdecks,
einem aus dem Aufnahmebehälter (24) herausbewegbaren Halteelement (28),
einem mit dem Halteelement (28) verbundenen, zumindest teilweise aus flexiblem Material hergestellten Dachelement (30) und
einem insbesondere an einer Vorderseite des Dachelements (30) vorgesehenen Fixierelements (60) zum Verbinden mit einer am Fahrrad vorgesehenen Dach-Haltevorrichtung (62), sodass das Dachelement (30) aufgespannt ist.

2. Regenverdeck nach Anspruch 1, **dadurch gekennzeichnet, dass** das Dachelement (30) an einem in herausbewegter Position des Halteelements (28) oberen Bereich des Halteelements (28) angeordnet ist.

3. Regenverdeck nach Anspruch 1 oder 2, **dadurch gekennzeichnet, dass** mit dem Halteelement (28) ein zumindest teilweise aus flexiblem Material hergestelltes Seitenelement (46) verbunden ist.

4. Regenverdeck nach Anspruch 3, **dadurch gekennzeichnet, dass** zwei Seitenelemente (46) vorgesehen sind, die an einander gegenüberliegenden insbesondere vertikal verlaufenden seitlichen Bereichen mit dem Halteelement (28) verbunden sind.

5. Regenverdeck nach Anspruch 3 oder 4, **dadurch gekennzeichnet, dass** an Vorderseiten der Seitenelemente (46) Fixierelemente zum Verbinden mit am Fahrradrahmen vorgesehenen Seiten-Haltevorrichtungen (59) vorgesehen sind.

6. Regenverdeck nach Anspruch 4 oder 5, **dadurch gekennzeichnet, dass** die Seitenelemente (46) aus steifem Material hergestellte Seitenteile (52) aufweisen, die vorzugsweise in einem vorderen Bereich angeordnet sind und besonders bevorzugt die Fixierelemente aufweisen.

7. Regenverdeck nach Anspruch 6, **dadurch gekennzeichnet, dass** die Seitenteile (52) Griffelemente (58), insbesondere mit Grifföffnungen aufweisen.

8. Regenverdeck nach einem der Ansprüche 3 bis 7, **dadurch gekennzeichnet, dass** die Seitenelemente (46) aus federelastischem Material hergestellte Verbindungsteile (50) aufweisen, die insbesondere schwenkbar mit dem Halteelemente (28), insbesondere den seitlichen Bereichen des Halteelements (28) verbunden sind.

9. Regenverdeck nach Anspruch 8, **dadurch gekennzeichnet, dass** die Seitenelemente (46) zwischen den Seitenteilen (50) und den Verbindungsteilen (52) ein aus elastischem Material hergestelltes Zwischenelement (54) aufweisen.

10. Regenverdeck nach einem der Ansprüche 1 bis 9, **gekennzeichnet durch** ein insbesondere mit dem Deckelelement (30) verbundenes Abdeckelement (64) zum Abdecken des Halteelements (28).

11. Regenverdeck nach einem der Ansprüche 1 bis 9, **dadurch gekennzeichnet, dass** die Dach-Haltevorrichtung und/oder die Seiten-Haltevorrichtung an einem mit dem Fahrradrahmen verbindbaren Windschutz (34) angeordnet sind.

12. Fahrrad mit,
einem zumindest ein Vorderrad (12) und zumindest ein Hinterrad (14) tragenden Fahrradrahmen (10),
einem Lenkelement (26) zum Lenken des mindestens einen Vorderrads (12) und/oder Hinterrads (14),
einem mit dem Fahrradrahmen (10) insbesondere höhenverstellbar verbundenen Sattelstützrohr (18), das einen Sattel (20) trägt und
einem Regenverdeck nach einem der Ansprüche 1 bis 11, wobei der Aufnahmebehälter (24) mit dem Fahrradrahmen (10) oder dem Sattelstützrohr (18) verbunden ist.

13. Fahrrad nach Anspruch 12, **dadurch gekennzeichnet, dass** der Windschutz (34) mit dem Fahrradrahmen, vorzugsweise in Fahrtrichtung vor dem Lenkerelement (26) verbunden ist.

14. Fahrrad nach Anspruch 13, **dadurch gekennzeichnet, dass** der Windschutz (34) zwei Windschutzelemente (36, 38) aufweist, wobei ein unteres Windschutzelement (38) fest und/oder verschiebbar mit dem Fahrradrahmen und ein oberes Windschutzelement (36) verschiebbar und/oder drehbar mit dem unteren Windschutzelement (38) verbunden ist.
